# FASCICULE DE BREVET EUROPEEN

(11) **EP 4 390 761 B1**
(45) Date de publication et mention de la délivrance du brevet: **05.11.2025**
(21) Numéro de dépôt: 23218766.6
(22) Date de dépôt: 20.12.2023
(51) Int. Cl.: G06K 19/07, G06K 19/077

(54) **SYSTÈME DE LOCALISATION D'ÉTIQUETTES**
ETIKETTENLOKALISIERUNGSSYSTEM
LABEL LOCATING SYSTEM

(30) Priorité: 21.12.2022 FR 2214093
(43) Date de publication de la demande: 26.06.2024
(73) Titulaire: Invirtus Technologies, 44000 Nantes (FR)
(72) Inventeur: CHAUDET, REMI, 44000 Nantes (FR)
(74) Mandataire: Fidal Innovation

(56) Documents cités:
- WO-A1-2015/136146
- CN-A- 110 070 166
- US-A1- 2005 148 121
- US-B1- 11 232 390

## Description

### DOMAINE DE L'INVENTION

La présente invention se rapporte à un système de localisation d'étiquettes **ARRIÈRE-PLAN TECHNOLOGIQUE**

WO 2015/136,146 décrit une étiquette électronique de prix comprenant un module photovoltaïque.

Dans le domaine de l'industrie ou de la logistique, il est connu d'entreposer des objets en un endroit pour une période de temps. Par exemple, dans le domaine de la logistique, un objet entre dans un entrepôt, y est entreposé pendant un certain temps, puis en ressort. Le cas échéant, l'objet peut être déplacé d'un endroit à un autre dans l'entrepôt.

Il existe actuellement un besoin d'une plus grande traçabilité des objets dans ces contextes. En effet, il arrive que, pour différentes raisons opérationnelles, un objet ne soit pas situé là où on s'attendrait qu'il soit.

Il a été proposé un certain nombre de solutions pour géolocaliser les objets dans un tel contexte. On peut prévoir par exemple une étiquette géolocalisée (technologie référencée sous l'acronyme « GPS » pour « Ground Positionning System ») associée à l'objet à localiser. En surveillant la localisation de cette étiquette, on peut obtenir une information sur le positionnement de l'objet. Un des défauts de cette solution est qu'elle est gourmande en énergie. Les étiquettes en question sont alimentées par une batterie intégrée dont le niveau de charge ne peut pas être contrôlé. Si la batterie de l'étiquette est vide, l'objet associé ne peut plus être localisé. Il en résulte des problèmes de fiabilité de la solution dans son ensemble. Pour résoudre ce problème, il faut inspecter régulièrement toutes les étiquettes pour des changements individuels de batterie, ou prévoir des campagnes de changement de batteries des étiquettes, ce qui est complexe à mettre en oeuvre.

L'invention vise ainsi à fournir une solution robuste à ce besoin de surveillance.

### RÉSUMÉ DE L'INVENTION

Ainsi, l'invention se rapporte à un système de localisation d'étiquettes dans un environnement, comprenant :
- au moins une ancre, adaptée pour être fixée dans l'environnement, et comprenant au moins un module de communication d'ancre,
- au moins une étiquette flexible, l'étiquette flexible comprenant :
   - un circuit imprimé flexible comprenant au moins un module de communication d'étiquette adapté pour communiquer avec le module de communication d'ancre, et un organe de connexion électrique de circuit imprimé,
   - un module photovoltaïque flexible assemblé au circuit imprimé flexible, le module photovoltaïque flexible comprenant une couche photovoltaïque et au moins un organe de connexion électrique adapté pour une connexion électrique à l'organe de connexion électrique de circuit imprimé,
   le circuit imprimé comprenant en outre un supercondensateur interposé entre l'organe de connexion électrique de circuit imprimé et le module de communication d'étiquette, le circuit imprimé flexible comprenant un circuit comparateur analogique entre le supercondensateur et le module de communication d'étiquette, et présentant une hystérésis déclenchant l'alimentation du module de communication d'étiquette pour une première tension d'entrée, et suspendant l'alimentation du module de communication d'étiquette pour une deuxième tension d'entrée inférieure à la première tension d'entrée.

Grâce à ces dispositions, on peut surveiller l'objet à surveiller sans risque de déplétion de la batterie. Il en résulte une fiabilité accrue du système et, par conséquent, une plus grande acceptabilité.

Bien que l'invention ait été présentée ci-dessus dans le contexte d'un entrepôt, celle-ci est applicable à d'autres domaines. Par exemple, dans le domaine de l'industrie, il est connu qu'un objet en cours de fabrication ou de conditionnement est déplacé d'un poste de travail à un autre au sein d'une usine, l'objet subissant divers traitements à chaque poste de travail. Ainsi, l'invention est également applicable à ce scénario.

Selon différents aspects, il est possible de prévoir l'une et/ou l'autre des caractéristiques ci-dessous prises seules ou en combinaison.

Selon une réalisation, le circuit imprimé flexible comprend au moins une capacité en parallèle du supercondensateur.

Selon une réalisation, le circuit imprimé flexible comprend un circuit électronique de protection entre le module photovoltaïque et le supercondensateur.

Selon une réalisation, l'étiquette comprend en outre un boîtier flexible assemblé au circuit imprimé flexible et au module photovoltaïque flexible, le circuit imprimé flexible étant intercalé entre le boitier et le module photovoltaïque flexible.

Selon une réalisation, le circuit imprimé flexible comprend un processeur adapté pour mettre en œuvre un traitement dépendant d'un paramètre d'alimentation du circuit imprimé flexible par le module photovoltaïque.

Selon une réalisation, le système de localisation comprend en outre un processeur adapté pour déterminer une position de l'étiquette à partir d'une communication reçue au module de communication d'ancre.

Selon une réalisation, le processeur comprend un module informatisé de contrôle adapté pour émettre une notification après comparaison des communications reçues avec une liste de contrôle ou un itinéraire programmé pour une étiquette.

Selon un autre aspect, l'invention se rapporte à une étiquette flexible, comprenant :
- un circuit imprimé flexible comprenant au moins un module de communication d'étiquette adapté pour communiquer avec un module de communication d'ancre, et un organe de connexion électrique de circuit imprimé,
- un module photovoltaïque flexible assemblé au circuit imprimé flexible, le module photovoltaïque flexible comprenant une couche photovoltaïque et au moins un organe de connexion électrique adapté pour une connexion électrique à l'organe de connexion électrique de circuit imprimé,
le circuit imprimé comprenant en outre un supercondensateur interposé entre l'organe de connexion électrique de circuit imprimé et le module de communication d'étiquette, le circuit imprimé flexible comprenant un circuit comparateur analogique entre le supercondensateur et le module de communication d'étiquette, et présentant une hystérésis déclenchant l'alimentation du module de communication d'étiquette pour une première tension d'entrée, et suspendant l'alimentation du module de communication d'étiquette pour une deuxième tension d'entrée inférieure à la première tension d'entrée.

### BRÈVE DESCRIPTION DES DESSINS

Des modes de réalisation de l'invention seront décrits ci-dessous par référence aux dessins, décrits brièvement ci-dessous :
[Fig. 1] représente une vue schématique d'un environnement dans lequel l'invention est mise en oeuvre selon un exemple de réalisation.
[Fig. 2] est une vue en perspective qui représente une étiquette selon un mode de réalisation.
[Fig. 3] est une vue éclatée du mode de réalisation de la figure 2.
[Fig. 4] est une vue schématique en coupe de l'étiquette de la figure 2.
[Fig. 5] est un schéma illustratif d'un circuit électronique selon un mode de réalisation.
[Fig. 6] est un diagramme temporel fictif représentatif de la tension Vin au cours du temps dans différentes phases de fonctionnement.

Sur les dessins, des références identiques désignent des objets identiques ou similaires.

### DESCRIPTION DÉTAILLÉE

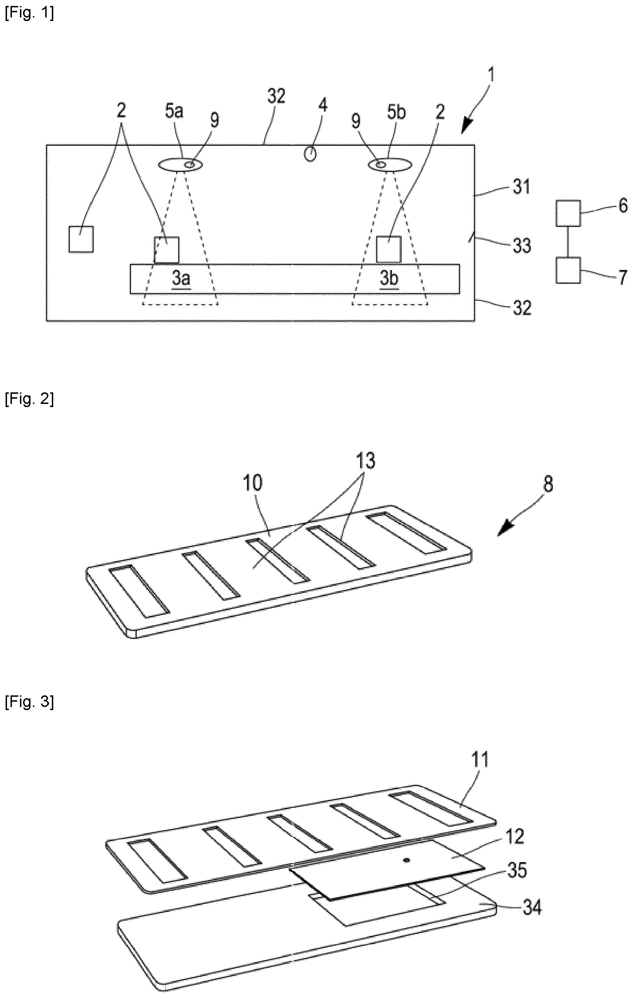

La figure 1 représente schématiquement un environnement 1 dans lequel l'invention, selon un mode de réalisation, est mise en œuvre. L'environnement 1 est par exemple un lieu couvert. Il peut s'agir en particulier d'un lieu fermé par une enceinte 31. L'enceinte 31 permet ainsi de définir un intérieur et un extérieur. Un tel lieu fermé peut comprendre des ouvertures, le cas échéant obturables de manière provisoire, pour un transfert dans ou hors de l'environnement 1. Dans le cadre de l'invention, l'environnement 1 a typiquement une superficie de l'ordre d'au moins 10 mètres carrés (m²). L'environnement 1 est par exemple typiquement une usine, un entrepôt, un atelier, une gare ferroviaire ou routière, un aéroport, un lieu pour la tenue d'évènements, tel que par exemple un musée, un stade, ou autre.

L'environnement 1 peut présenter une enceinte 31 au moins partiellement translucide, permettant l'entrée de lumière solaire à l'intérieur de l'enceinte. Par exemple, l'enceinte 31 comprend des surfaces translucides 32, en verre ou plastique, telles que des portes vitrées, des fenêtres, des fenêtres de toit, etc... Le cas échéant, seule une partie de l'intérieur est exposée à la lumière solaire, et une partie de l'intérieur ne reçoit aucune lumière solaire, temporairement ou définitivement.

Dans le cadre de l'invention, on considère qu'un endroit ne reçoit aucune lumière solaire quand, en cet endroit, l'intensité lumineuse est inférieure à un seuil prédéterminé.

L'illumination locale naturelle à l'intérieur de l'emplacement est susceptible de varier au cours du temps, du fait d'une part du cycle d'illumination par le soleil (cycle quotidien, mais dépendant également des saisons) et d'autre part de l'obturation des voies d'accès de la lumière solaire, par la fermeture partielle ou totale de portes, de volets, de rideaux ou autre dispositifs occultants de l'environnement 1.

L'environnement 1 peut comprendre un éclairage artificiel 4. L'éclairage artificiel 4 peut comprendre un ou plusieurs objets susceptibles d'émettre de la lumière, notamment quand ils reçoivent de l'énergie, en particulier électrique. L'éclairage artificiel 4 peut comprendre par exemple une ou plusieurs ampoules, néons, diodes électroluminescentes ou autre. De plus l'éclairage artificiel 4 peut être commandé par un système d'interruption 33, permettant ainsi d'alternativement éteindre ou allumer tout ou partie de l'éclairage artificiel 4.

L'invention est applicable à un environnement 1 comprenant un éclairage naturel et/ou un éclairage artificiel.

A l'intérieur de l'environnement 1, on trouve un ou plusieurs objets 2. L'objet 2 est notamment mobile par rapport à l'environnement 1. L'objet 2 n'est pas nécessairement solidaire de l'environnement 1, et peut entrer à l'intérieur de celui-ci et/ou en sortir. On peut par exemple considérer les cas suivants : l'objet 2 est créé dans l'environnement 1, puis en sort ; l'objet 2 entre dans l'environnement 1 et y est déconstruit ou détruit ; l'objet 2 entre dans l'environnement 1, y reste pendant un certain temps, puis en ressort ; l'objet 2 est créé dans l'environnement 1 (ou y est déjà présent), et y est utilisé sans en sortir.

Selon un exemple purement illustratif, l'environnement 1 est une usine comprenant plusieurs postes de travail 3. On désigne par les références « 3a » et « 3b » deux postes de travail distincts l'un de l'autre et espacés l'un de l'autre. L'objet 2 est susceptible de se trouver de manière successive en l'un puis en un autre poste de travail 3a, 3b. En ces postes de travail, l'objet 2 peut être stocké et/ou transformé. L'objet 2 est mobile d'un poste de travail 3a à un autre poste de travail 3b par tout moyen approprié, par exemple en étant déplacé manuellement et/ou via un convoyeur mécanisé ou autre.

Par exemple, selon un mode de réalisation, il est prévu un procédé de traitement de l'objet 2 qui nécessite qu'il passe un premier instant de durée d1 au premier poste de travail 3a, puis soit transporté au deuxième poste de travail 3b où il passe un deuxième instant de durée d2. Le transfert entre le premier poste de travail 3a et le deuxième poste de travail 3b peut typiquement être de durée d3. Les étapes subies par l'objet 2 avant le premier poste de travail 3a et après le deuxième poste de travail 3b ne sont pas décrites ici. Par exemple, l'objet 2 entre dans l'environnement 1 avant le premier poste de travail 3a et sort de l'environnement 1 après le deuxième poste de travail 3b. Toutefois, d'autres alternatives sont possibles.

Selon un mode de réalisation, le système de localisation comprend au moins un processeur 6. De plus, le système de localisation comprend au moins une ancre 5. Cette ancre 5 est fixée dans l'environnement 1. L'ancre 5 comprend un premier module de communication adapté pour communiquer avec le processeur 6. Tout mode de communication peut être utilisé pour permettre la communication entre l'ancre 5 et le processeur 6, tel que GSM, TCP/IP ou autre. L'ancre 5 peut également être mobile, si la position de l'ancre est déterminée ou déterminable par elle-même ou le processeur 6. L'ancre 5 est par exemple mise en œuvre dans un téléphone portable intelligent.

Au niveau du processeur 6, la localisation de l'ancre 5 est connue. La localisation de l'ancre 5 peut être stockée dans une mémoire 7 accessible au processeur 6, lors de la configuration du système.

L'ancre 5 peut être caractérisée par un identifiant. Ceci peut notamment être utile si le système de localisation comprend plusieurs ancres. Dans ce cas, l'identifiant de chaque ancre est associé avec sa localisation.

Dans l'exemple présenté, le système de localisation comprend par exemple une ancre 5a fixée au plafond au droit du poste de travail 3a, et une ancre 5b fixée au plafond au droit du poste de travail 3b.

L'ancre 5 comprend en outre un deuxième module de communication 9. Le deuxième module de communication 9 est adapté pour communiquer par ondes radio avec une étiquette 8 décrite plus loin.

Le système de localisation comprend en outre au moins une étiquette 8, telle que représentée par exemple sur la figure 2.

Une telle étiquette 8 est flexible. Par « flexible », on entend que le rayon de courbure de l'étiquette 8 est inférieur à 8 centimètres. La flexibilité de l'étiquette 8 lui permet de s'adapter plus facilement à différents types d'environnements ou d'objets 2, et de pouvoir subir des contraintes mécaniques importantes sans détérioration.

Comme représenté sur la figure 2, l'étiquette 8 est typiquement un objet dont l'épaisseur est de l'ordre de 1 à 3 millimètres (mm) et dont les dimensions dans les deux autres directions sont de l'ordre de 1 à 10 centimètres (cm), voire plus selon besoin. L'étiquette 8 comprend une face principale 10 destinée à être tournée face à un rayonnement lumineux. Comme visible plus précisément sur la figure 3 en éclaté, l'étiquette 8 comprend un module photovoltaïque 11 flexible et un circuit imprimé flexible 12. Le module photovoltaïque 11 et le circuit imprimé flexible 12 sont solidaires l'un de l'autre. On peut par exemple prévoir qu'ils sont tous deux solidarisés à un boîtier 34 flexible de l'étiquette 8, par exemple réalisé en mousse. Par exemple, le module photovoltaïque 11 et le circuit imprimé flexible 12 sont superposés l'un à l'autre. Selon un exemple, le module photovoltaïque 11 est collé au boitier 34, et le circuit imprimé flexible 12 est pris en sandwich entre ces deux composants. On peut prévoir un logement 35 défini dans le module photovoltaïque 11 et/ou le boîtier 34, qui accueille les composants électroniques montés en surface du circuit imprimé flexible 12.

Le module photovoltaïque 11 flexible comprend une ou plusieurs cellules photovoltaïques 13. On prévoit par exemple des cellules photovoltaïques organiques, également désignées par l'acronyme « OPV ». Ces cellules photovoltaïques 13 comprennent une couche de matière transformant le rayonnement lumineux incident en électricité, une série de premières électrodes sur une première face, par exemple la face principale 10 de l'étiquette 8, et une série de deuxièmes électrodes sur une deuxième face 16 opposée à la première face 10. La série de premières électrodes est raccordée électriquement à un premier contact électrique 17, et la série de deuxièmes électrodes est raccordée électriquement à un deuxième contact 18.

Le circuit imprimé flexible 12 comprend un substrat 19 flexible isolant portant des composants électroniques 20. Le substrat 19 comprend une première face 21 et une deuxième face 22 opposée à la première face 21. Dans l'exemple présenté, la deuxième face 22 est tournée à l'opposé du module photovoltaïque, et porte les composants électroniques 20. Les composants électroniques 20 sont ainsi disposés entre le boîtier 34 et le substrat flexible 19, et sont ainsi protégés. Le substrat 19 porte également des pistes électroniques pour la connexion électrique des composants électroniques 20. Le circuit imprimé flexible 12 comporte un premier contact électrique 23 destiné à être connecté électriquement au premier contact électrique 17 du module photovoltaïque 11. Cette connexion électrique se fait par exemple par l'intermédiaire d'un fil électrique 24 ou un ruban conducteur. Le circuit imprimé flexible 12 comporte un deuxième contact électrique 25 destiné à être connecté électriquement au deuxième contact électrique 18 du module photovoltaïque 11. Cette connexion électrique se fait par exemple par l'intermédiaire d'une colle électriquement conductrice, si les contacts électriques 18 et 25 sont juxtaposés. D'autres mises en œuvre de connexion électrique entre le module photovoltaïque 11 et le circuit imprimé flexible 12, comme par exemple l'utilisation de deux fils électriques ou rubans conducteurs, ou l'utilisation de colle conductrice pour chaque contact. **En** variante, les composants électroniques 20 sont disposés sur la face 21 du circuit imprimé flexible 12 faisant face au module photovoltaïque 11. On peut alors prévoir une couche de mousse interposée entre le circuit imprimé flexible 12 et le module photovoltaïque 11.

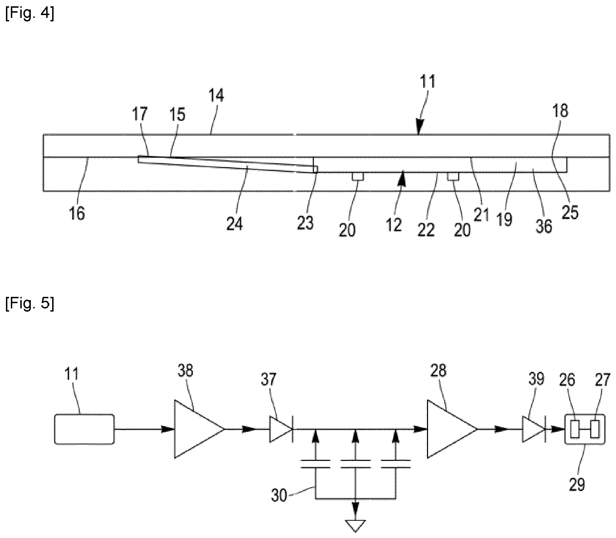

Comme représenté sur la figure 5, le circuit imprimé flexible 12 porte un circuit électronique qui comprend une charge 29 comprenant au moins un processeur 26 et un module de communication 27 adapté pour communiquer par ondes radios avec le deuxième module de communication 9 des ancres 5. La charge 29 peut également comprendre un capteur (non représenté). Il peut par exemple s'agir d'un capteur de température ambiante. La charge 29 peut également comprendre une ou plusieurs diodes électroluminescentes (LEDs). Le module de communication 27 comprend une antenne 36 dessinée sur le circuit imprimé flexible 12. La charge 29 est dimensionnée pour consommer une intensité électrique très faible. Par exemple, l'intensité électrique moyenne consommée par la charge est inférieure à 10 micro-Ampères (µA). L'intensité électrique moyenne comprend des épisodes de consommation de pic et des épisodes de consommation très faible. Les épisodes de consommation de pic sont espacés dans le temps. Par exemple, le rapport cyclique de la charge 29, de la durée de temps active à la période de fonctionnement, est inférieure à 0,01. De plus, l'intensité électrique consommée en période active, correspondant à l'émission du signal, est très faible, par exemple inférieure à 10 milliAmpères (mA) En particulier, le module de communication 27 de l'étiquette 8 et le deuxième module de communication 9 de l'ancre 5 sont des modules complémentaires, permettant une communication sans fil, par ondes radio, entre ces deux modules.

La charge 29 du circuit électronique porté par le circuit imprimé flexible 12 ne comporte pas de batterie, ni n'est connectée à une batterie ni à un connecteur de charge susceptible d'être branché sur un chargeur externe.

Le circuit imprimé flexible 12 est alimenté en énergie électrique par le module photovoltaïque 11. Plus précisément, le module photovoltaïque 11 charge un supercondensateur 30 qui est utilisé pour alimenter la charge 29 (comprenant au moins le processeur 26 et le module de communication 27). Le supercondensateur 30 est par exemple un condensateur à double couche électrochimique (connu sous l'acronyme « EDLC » pour « Electrochemical double layer capacitor »). Selon un exemple de réalisation, comme représenté sur la figure 5, on peut utiliser une capacité en parallèle du supercondensateur 30. Cette capacité est par exemple un autre supercondensateur 30, voire, comme représenté, deux autres supercondensateurs 30, ou une capacité présentant une faible résistance interne. Ceci permet de réduire la résistance équivalente de cette portion de circuit, et donc de réduire le risque que la tension en entrée du circuit comparateur analogique en aval chute sous V_UVLO-.

Un circuit électronique de protection 37 est interposé entre le module photovoltaïque 11 et le supercondensateur 30 pour ne pas décharger le supercondensateur 30 vers le module photovoltaïque 11 et pour protéger le module photovoltaïque 11 quand la tension aux bornes du supercondensateur 30 est supérieure à la tension délivrée par le module photovoltaïque 11. On peut par exemple utiliser un circuit dit « TRCB », acronyme de l'expression « True reverse current blocking », pour « Véritable Blocage de Courant Inverse », tel que par exemple décrit dans US2013/063,116, incorporé ici par référence en entier dans tout but. Un circuit comparateur analogique 28 est interposé entre le supercondensateur 30 et la charge 29.

Selon un mode de réalisation, le circuit comparateur analogique 28 est utilisé pour ne permettre au module photovoltaïque 11 d'alimenter la charge 29 que si la tension délivrée est supérieure à une tension de seuil minimale prédéterminée V_UVLO+. L'alimentation initiale de la charge 29 en énergie crée en effet un appel d'énergie qui fait chuter la tension délivrée par le supercondensateur 30 et, si cet appel fait chuter cette tension à une valeur inférieure à une valeur prédéterminée V_UVLO-, la charge 29 ne serait plus alimentée correctement, et la charge 29 ne peut pas démarrer correctement, et risque d'être endommagée. La valeur de la tension de seuil minimale prédéterminée V_UVLO+ est telle que la chute de tension due au démarrage de la charge 29 ne fait pas chuter la tension délivrée par le module photovoltaïque 11 sous ladite valeur prédéterminée V_UVLO-.

Une fois la charge démarrée, le supercondensateur 30 fournit à la charge une tension d'entrée supérieure à V_UVLO-, tant que celui-ci est suffisamment chargé.

Ainsi, le circuit imprimé flexible 12 ne comprend pas de circuit de recherche du point de puissance maximum (mieux connu sous l'acronyme anglais « MPPT » pour « maximum power point tracking »). L'absence de « MPPT » permet de ne pas consommer l'énergie dont ce dernier a besoin pour fonctionner.

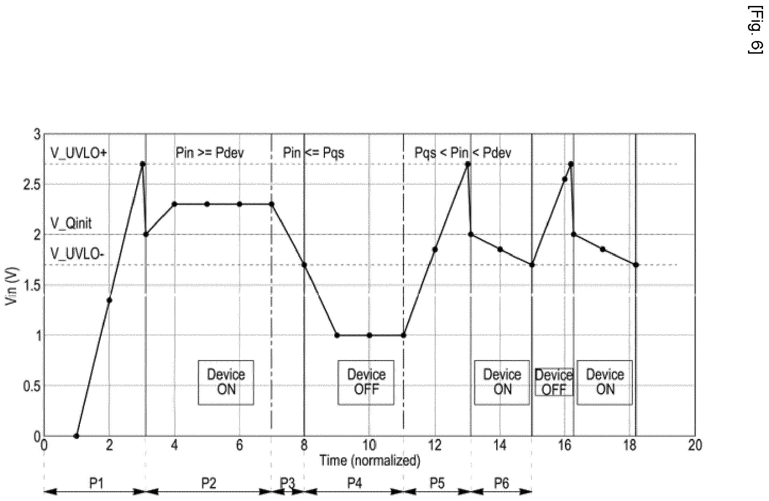

La figure 6 illustre ainsi un cycle d'alimentation de la charge lors de variation d'illumination ambiante. L'abscisse est le temps, et l'ordonnée est la tension en sortie du supercondensateur 30. On suppose que le temps t=1 correspond à un instant où l'étiquette 8 passe du noir complet à une exposition à la lumière, naturelle ou artificielle, par exemple lever du soleil, accessibilité à la lumière (retrait d'un cache ou d'un masque du module photovoltaïque), allumage d'un éclairage artificiel, etc... dans un état initial où le supercondensateur 30 est complètement déchargé.

Au cours d'une première phase P1, au-dessus d'une certaine luminosité, par exemple de 50 lux, le module photovoltaïque 11 charge le supercondensateur 30, et la tension aux bornes de celui-ci augmente jusqu'à atteindre la tension V_UVLO+. Cette étape peut typiquement durer au moins 15 minutes, notamment dans le cas d'un lever de soleil. A ce stade, le circuit comparateur analogique 28 détecte que la tension Vin est supérieure à V_UVLO+, et autorise l'alimentation de la charge 29, ce qui permet à celle-ci de démarrer. Du fait du démarrage, la tension Vin chute à une valeur V_Qinit supérieure à V_UVLO-. La charge 29 fonctionne alors.

Régulièrement, pendant cette phase P2 de fonctionnement, le processeur 26 commande au module de communication 27 d'émettre. La fréquence des communications est par exemple de l'ordre d'une communication toutes les secondes à une communication toutes les heures, voire d'une communication toutes les secondes à une communication toutes les minutes. Le module de communication 27 communique par exemple un identifiant de l'étiquette 8. Si l'étiquette 8 comporte un capteur, le module de communication 27 peut également communiquer la valeur d'au moins une mesure récente du capteur. Le deuxième module de communication 9 d'une ancre 5 détecte le signal émis. C'est le cas notamment si une ancre 5 est proche de l'étiquette 8. Si le système comprend plusieurs ancres 5, il se peut que seules certaines, voire une seule, des ancres 5 détectent le signal émis par l'étiquette 8.

Comme visible sur la figure 6, pendant cette deuxième phase P2, la puissance lumineuse arrivant sur le module photovoltaïque est supérieure à une puissance seuil, et la charge 29 est alimentée par le module photovoltaïque 11.

A un certain moment, la puissance lumineuse disponible devient inférieure à la puissance seuil. Il s'agit par exemple d'un coucher de soleil, d'une extinction de la lumière, ou d'un masquage du module photovoltaïque 11 (par exemple recouvert par un objet opaque). Dans cette troisième phase P3, le supercondensateur 30 continue alors à alimenter la charge 29. Tant que la tension baisse en restant supérieure à V_UVLO-, la charge 29 continue d'être alimentée et de fonctionner.

Une fois la tension Vin inférieure à V_UVLO-, le circuit comparateur analogique 28 détecte que la tension Vin est inférieure à V_UVLO-, et coupe l'alimentation de la charge 29. Ainsi, le circuit comparateur analogique 28 met en œuvre une hystérésis pour comparer la tension Vin à une tension de seuil V_UVLO+ pour l'alimentation de la charge 29 et à une tension de seuil V_UVLO- inférieure à V_UVLO+, pour couper l'alimentation de la charge 29. Dans une quatrième phase P4, la charge 29 n'est plus alimentée et ne fonctionne plus. Malgré tout, par exemple, la luminosité reste suffisante pour que le supercondensateur 30 continue de délivrer une tension non nulle.

Le supercondensateur 30 est dimensionné en fonction de l'environnement 1, pour que les cas où la tension Vin devient inférieure à V_UVLO- restent exceptionnels.

Dans une cinquième phase P5, le module photovoltaïque 11 reçoit à nouveau la lumière. On suppose arguendo que cette puissance lumineuse est faible, et inférieure à la puissance nécessaire au fonctionnement de la charge 29. La tension Vin augmente tout en restant inférieure à V_UVLO+, et la charge 29 reste éteinte.

A un certain moment, comme décrit ci-dessus, le circuit comparateur analogique 28 détecte que la tension Vin est supérieure à V_UVLO+, et autorise l'alimentation de la charge 29, ce qui permet à celle-ci de démarrer. Du fait du démarrage, la tension Vin chute à une valeur V_Qinit supérieure à V_UVLO-. La charge 29 fonctionne alors, dans cette sixième phase P6.

Toutefois, comme la puissance lumineuse est inférieure à la puissance de fonctionnement de la charge 29, la tension Vin chute, dans cette sixième phase P6, jusqu'à V_UVLO-. Le circuit comparateur analogique 28 détecte que la tension Vin est inférieure à V_UVLO-, et coupe l'alimentation de la charge 29.

Le fonctionnement de l'étiquette 8 peut se poursuivre selon les principes présentés ci-dessus.

Le processeur 26 peut être programmé pour commander l'alimentation d'une ou plusieurs LEDs de l'étiquette selon certaines conditions prédéfinies. Par exemple, si suffisamment d'énergie est disponible, le processeur 26 commande l'allumage d'une LED, par exemple de manière périodique.

Selon une réalisation, le processeur 26 est programmé pour mettre en œuvre un traitement en fonction d'un paramètre d'alimentation. Le paramètre d'alimentation est par exemple une valeur de la tension délivrée par le module photovoltaïque 11, qui peut être fourni en tant qu'entrée analogique du processeur 26. En fonction du paramètre d'alimentation, le processeur 26 peut mettre en œuvre l'une et/ou l'autre des fonctions ci-dessous. Le processeur 26 peut modifier la fréquence de communication du module de communication 27, espaçant par exemple les communications si le paramètre d'alimentation est représentatif d'une baisse d'alimentation. Le processeur 26 peut modifier la nature des informations communiquées, réduisant par exemple les informations communiquées au strict minimum (l'identifiant de l'étiquette) si le paramètre d'alimentation est représentatif d'une baisse d'alimentation. Le processeur 26 peut modifier les paramètres d'activation d'une diode électroluminescente, déclenchant par exemple l'alimentation d'une diode électroluminescente si le paramètre d'alimentation est représentatif d'une baisse d'alimentation. Le processeur 26 peut modifier le fonctionnement des composants électroniques, interrompant par exemple l'alimentation d'un capteur si le paramètre d'alimentation est représentatif d'une baisse d'alimentation.

L'étiquette 8 est donc peu sensible aux variations d'illuminations dans l'environnement (alternance jour/nuit ou été/hiver, passages nuageux, utilisation complémentaire ou non d'éclairage artificiel, fréquence d'utilisation et nature de celui-ci, distance de l'étiquette aux sources de lumières, etc...).

Selon une variante de réalisation, comme représenté sur la figure 5, le circuit électronique porté par le circuit imprimé flexible 12 comporte un composant électronique de sécurité 38 adapté pour limiter la tension en sortie du module photovoltaïque 11 appliquée au supercondensateur 30.

Selon une variante de réalisation, le circuit électronique porté par le circuit imprimé flexible 12 comporte une batterie à état solide montée en surface, en amont du supercondensateur 30.

Selon une variante de réalisation, telle que représentée sur la figure 5, le circuit électronique porté par le circuit imprimé flexible 12 comporte un composant passif 39 entre le circuit comparateur analogique 28 et la charge 29. Ce composant passif 39, de type diode par exemple, permet d'empêcher à une tension faible non contrôlée d'alimenter la charge 29, en dehors des plages de fonctionnement.

Régulièrement, les ancres 5 communiquent au processeur 6, via leur module de communication, les signaux qu'elles ont reçu des étiquettes 8 et les identifiants de celles-ci. Le processeur 6 détermine la position d'une étiquette 8 à partir de la position connue d'une ancre 5 ou des ancres 5 l'ayant détectée.

Le système décrit ci-dessus peut être utilisé dans un environnement 1 dans lequel on souhaite déterminer régulièrement la position d'objets 2. Pour cela, on rend solidaire un objet 2 d'une étiquette 8. Il existe diverses possibilités pour cette solidarisation. De préférence, la face de l'étiquette 8 comportant le module photovoltaïque 11 reste tournée accessible à la lumière ambiante lors de cette solidarisation. Par exemple, l'objet 2 est placé dans une barquette, et l'étiquette 8 est solidarisée à la barquette. On peut prévoir de glisser l'étiquette 8 avec bonne orientation dans une pochette flexible translucide solidarisée à la barquette (dans laquelle sont par exemple également insérés des documents papier relatifs à l'objet 2, par exemple des documents de traçabilité ou de contrôle qualité). La pochette est par exemple fixée sur la face extérieure du flanc de la barquette, permettant ainsi d'empiler les barquettes tout en laissant l'accès des étiquettes 8 à la lumière.

**En** variante, l'étiquette 8 peut comporter une face adhésive (la face opposée à la face 10) pouvant être solidarisée par collage à l'objet 2 ou un objet solidaire de celui-ci. L'étiquette 8 peut alors comporter un film pelable (non représenté) qui est retiré avant solidarisation par collage à l'objet 2. La flexibilité de l'étiquette 8 permet de coller celle-ci sur une surface non plane et/ou rugueuse de l'objet 2, et donc de s'adapter pour différentes utilisations.

Le processeur 6 comprend un module informatisé de contrôle adapté pour contrôler les étiquettes 8 présentes dans l'environnement 1.

Par exemple, le module informatisé de contrôle accède à une liste de contrôle des identifiants d'étiquettes 8 renseignées par un opérateur, et susceptibles d'être présentes dans l'environnement, et compare avec les identifiants des étiquettes 8 dont la position a été déterminée pendant une période de temps antérieure prédéterminée. Si le module informatisé de contrôle détermine que la position d'une étiquette 8 de la liste de contrôle n'a pas été déterminée, cela peut signifier que l'étiquette 8 est, de manière imprévue, en dehors de l'environnement 1 ou plus alimentée en énergie solaire. Le module informatisé de contrôle peut alors émettre un signal ou une notification d'alarme comprenant au moins l'identifiant de cette étiquette 8.

Si la mémoire 7 comprend des positions antérieures déterminées pour cette étiquette 8, la notification peut comprendre la dernière position déterminée pour l'étiquette 8.

Par exemple, lorsque l'objet 2 pénètre dans l'environnement, on lui associe une étiquette 8, et on ajoute l'étiquette 8 à la liste de contrôle des identifiants. Lorsque l'objet 2 quitte l'environnement, on le désassocie de l'étiquette 8, et on retire celle-ci de la liste des identifiants.

Selon un autre mode de réalisation, le module informatisé de contrôle compare l'itinéraire d'une étiquette avec un itinéraire programmé pour cette étiquette. Selon un premier exemple, un itinéraire programmé comprend une durée maximale passée par une étiquette en une position. A partir d'une pluralité de détections de position d'une étiquette 8, le module informatisé de contrôle détermine l'itinéraire de l'étiquette, et compare celui-ci avec l'itinéraire programmé. En cas de différence entre l'itinéraire détecté et l'itinéraire programmé, un signal ou une notification d'alarme peut être émise. Cette notification peut comprendre la position d'une étiquette concernée, voire l'identifiant de celle-ci.

Ainsi, s'il est déterminé qu'une étiquette passe plus de temps que prévu en une position déterminée, une alarme peut être émise avec la position identifiée.

D'autres réalisations sont possibles.

### LISTE DES SIGNES DE RÉFÉRENCE

1 : Environnement
2 : Objet
3 : poste de travail
4 : Eclairage artificiel
5 : Ancre
6 : processeur
7 : Mémoire
8 : Etiquette
9 : deuxième module de communication
10 : face principale
11 : module photovoltaïque
12 : circuit imprimé flexible
13 : cellules photovoltaïques
14 : premières électrodes
15 : deuxièmes électrodes
16 : deuxième face
17 : premier contact électrique
18 : deuxième contact électrique
19 : substrat
20 : composants électroniques
21 : première face
22 : deuxième face
23 : premier contact électrique
24 : fil électrique
25 : deuxième contact électrique
26 : processeur
27 : module de communication
28 : circuit comparateur analogique
29 : charge
30 : supercondensateur
31 : enceinte
32 : surface translucide
33 : système d'interruption
34 : boîtier
35 : logement
36 : antenne
37 : circuit électronique de protection
38 : composant électronique de sécurité
39 : composant passif

## Revendications

1. Système de localisation d'étiquettes dans un environnement, comprenant :
- au moins une ancre (5), adaptée pour être disposée dans l'environnement, et comprenant au moins un module de communication d'ancre,
- au moins une étiquette (8) flexible, l'étiquette flexible comprenant :
. un circuit imprimé flexible (12) comprenant au moins un module de communication d'étiquette (27) adapté pour communiquer avec le module de communication d'ancre, et un organe de connexion électrique (23, 25) de circuit imprimé,
. un module photovoltaïque (11) flexible assemblé au circuit imprimé flexible (12), le module photovoltaïque (11) flexible comprenant une couche photovoltaïque et au moins un organe de connexion électrique (17, 18) adapté pour une connexion électrique à l'organe de connexion électrique (23, 25) de circuit imprimé,
le circuit imprimé (12) comprenant en outre un supercondensateur (30) interposé entre l'organe de connexion électrique de circuit imprimé (23, 25) et le module de communication d'étiquette (27),
**caractérisé en ce que** le circuit imprimé flexible (12) comprend un circuit comparateur analogique (28) entre le supercondensateur (30) et le module de communication d'étiquette (27), et présentant une hystérésis déclenchant l'alimentation du module de communication d'étiquette (27) pour une première tension d'entrée, et suspendant l'alimentation du module de communication d'étiquette (27) pour une deuxième tension d'entrée inférieure à la première tension d'entrée.

2. Système de localisation d'étiquettes selon la revendication 1, dans lequel le circuit imprimé flexible (12) comprend au moins une capacité en parallèle du supercondensateur (30).

3. Système de localisation d'étiquettes selon l'une des revendications 1 à 2, dans lequel le circuit imprimé flexible (12) comprend un circuit électronique de protection (37) entre le module photovoltaïque (11) et le supercondensateur (30).

4. Système de localisation d'étiquettes selon l'une des revendications 1 à 3, dans lequel l'étiquette (8) comprend en outre un boîtier (34) flexible assemblé au circuit imprimé flexible (12) et au module photovoltaïque (11) flexible, le circuit imprimé flexible (12) étant intercalé entre le boitier (34) et le module photovoltaïque (11) flexible.

5. Système de localisation d'étiquettes selon l'une des revendications 1 à 4, dans lequel le circuit imprimé flexible (12) comprend un processeur (26) adapté pour mettre en œuvre un traitement dépendant d'un paramètre d'alimentation du circuit imprimé flexible (12) par le module photovoltaïque (11).

6. Système de localisation d'étiquettes selon l'une des revendications 1 à 5, comprenant en outre un processeur (6) adapté pour déterminer une position de l'étiquette (8) à partir d'une communication reçue au module de communication d'ancre.

7. Système de localisation d'étiquettes selon la revendication 6, dans lequel le processeur (6) comprend un module informatisé de contrôle adapté pour émettre une notification après comparaison des communications reçues avec une liste de contrôle ou un itinéraire programmé pour une étiquette (8).

8. Etiquette flexible, comprenant :
. un circuit imprimé flexible (12) comprenant au moins un module de communication (27) d'étiquette adapté pour communiquer avec un module de communication d'ancre, et un organe de connexion électrique (23, 25) de circuit imprimé,
. un module photovoltaïque (11) flexible assemblé au circuit imprimé flexible (12), le module photovoltaïque flexible (11) comprenant une couche photovoltaïque et au moins un organe de connexion électrique (17, 18) adapté pour une connexion électrique à l'organe de connexion électrique (23, 25) de circuit imprimé,
le circuit imprimé (12) comprenant en outre un supercondensateur (30) interposé entre l'organe de connexion électrique (23, 25) de circuit imprimé et le module de communication (27) d'étiquette,
**caractérisée en ce que** le circuit imprimé flexible (12) comprend un circuit comparateur analogique (28) entre le supercondensateur (30) et le module de communication d'étiquette (27), et présentant une hystérésis déclenchant l'alimentation du module de communication d'étiquette (27) pour une première tension d'entrée, et suspendant l'alimentation du module de communication d'étiquette (27) pour une deuxième tension d'entrée inférieure à la première tension d'entrée.

## Patentansprüche

1. Etiketten-Lokalisierungssystem in einer Umgebung, das folgendes umfasst:
- mindestens einen Anker (5), der geeignet ist, in der Umgebung angeordnet zu werden und der mindestens ein Anker-Kommunikationsmodul umfasst,
- mindestens ein flexibles Etikett (8), wobei das flexible Etikett folgendes umfasst:
. eine flexible Leiterplatte (12) mit mindestens einem Etikettenkommunikationsmodul (27), das für die Kommunikation mit dem Anker-Kommunikationsmodul geeignet ist, und ein elektrisches Verbindungselement (23, 25) der Leiterplatte,
. ein flexibles Photovoltaikmodul (11), das an der flexiblen Leiterplatte (12) angebracht ist, wobei das flexible Photovoltaikmodul (11) eine photovoltaische Schicht und mindestens ein elektrisches Verbindungselement (17, 18) umfasst, das für eine elektrische Verbindung mit dem elektrischen Verbindungselement (23, 25) der Leiterplatte geeignet ist, wobei die Leiterplatte (12) ferner einen Superkondensator (30) umfasst, der zwischen dem elektrischen Verbindungselement der Leiterplatte (23, 25) und dem Etiketten-Kommunikationsmodul (27) angeordnet ist, **dadurch gekennzeichnet, dass** die flexible Leiterplatte (12) einen analogen Komparatorschaltkreis (28) zwischen dem Superkondensator (30) und dem Etiketten-Kommunikationsmodul (27) umfasst, und eine Hysterese aufweist, welche die Stromversorgung des Etiketten-Kommunikationsmoduls (27) bei einer ersten Eingangsspannung aktiviert und die Stromversorgung des Etiketten-Kommunikationsmoduls (27) bei einer zweiten, niedrigeren Eingangsspannung als der ersten unterbricht.

2. Etiketten-Lokalisierungssystem nach Anspruch 1, in dem die flexible Leiterplatte (12) mindestens einen Kondensator parallel zum Superkondensator (30) umfasst.

3. Etiketten-Lokalisierungssystem nach einem der Ansprüche 1 bis 2, in dem die flexible Leiterplatte (12) eine elektronische Schutzschaltung (37) zwischen dem Photovoltaikmodul (11) und dem Superkondensator (30) umfasst.

4. Etiketten-Lokalisierungssystem nach einem der Ansprüche 1 bis 3, in dem das Etikett (8) ferner ein flexibles Gehäuse (34) umfasst, das an der flexiblen Leiterplatte (12) und dem flexiblen Photovoltaikmodul (11) angebracht ist, wobei die flexible Leiterplatte (12) zwischen dem Gehäuse (34) und dem flexiblen Photovoltaikmodul (11) angeordnet ist.

5. Etiketten-Lokalisierungssystem nach einem der Ansprüche 1 bis 4, in dem die flexible Leiterplatte (12) einen Prozessor (26) umfasst, der für die Durchführung einer Verarbeitung in Abhängigkeit von einem Versorgungsparameter der flexiblen Leiterplatte (12) durch das Photovoltaikmodul (11) geeignet ist.

6. Etiketten-Lokalisierungssystem nach einem der Ansprüche 1 bis 5, das ferner einen Prozessor (6) umfasst, der für die Bestimmung einer Position des Etiketts (8) anhand einer am Anker-Kommunikationsmodul empfangenen Kommunikation geeignet ist.

7. Etiketten-Lokalisierungssystem nach Anspruch 6, in dem der Prozessor (6) ein computergestütztes Steuermodul umfasst, das für die Ausgabe einer Benachrichtigung geeignet ist, nachdem die empfangenen Kommunikationsdaten mit einer Prüfliste oder einer für ein Etikett (8) programmierten Route verglichen wurden.

8. Flexibles Etikett, das folgendes umfasst:
. eine flexible Leiterplatte (12) mit mindestens einem Etiketten-Kommunikationsmodul (27), das für die Kommunikation mit einem Anker-Kommunikationsmodul geeignet ist, und einem elektrischen Verbindungselement (23, 25) der Leiterplatte,
. ein flexibles Photovoltaikmodul (11), das an der flexiblen Leiterplatte (12) angebracht ist, wobei das flexible Photovoltaikmodul (11) eine photovoltaische Schicht und mindestens ein elektrisches Verbindungselement (17, 18) umfasst, das für eine elektrische Verbindung mit dem elektrischen Verbindungselement (23, 25) der Leiterplatte geeignet ist, wobei die Leiterplatte (12) ferner einen Superkondensator (30) zwischen dem elektrischen Verbindungselement (23, 25) der Leiterplatte und dem Kommunikationsmodul (27) des Etiketts umfasst, **dadurch gekennzeichnet, dass** die flexible Leiterplatte (12) einen analogen Komparatorschaltkreis (28) zwischen dem Superkondensator (30) und dem Kommunikationsmodul des Etiketts (27) umfasst, und eine Hysterese aufweist, welche die Stromversorgung des Kommunikationsmoduls des Etiketts (27) bei einer ersten Eingangsspannung einschaltet und die Stromversorgung des Kommunikationsmoduls des Etiketts (27) bei einer zweiten, niedrigeren Eingangsspannung als der ersten unterbricht.

## Claims

1. System for locating labels in an environment, comprising:
- at least one anchor (5), adapted to be arranged in the environment, and comprising at least one anchor communication module,
- at least one flexible label (8), the flexible label comprising:
. a flexible printed circuit (12) comprising at least one label communication module (27) adapted to communicate with the anchor communication module, and an electrical connection member (23, 25) of the printed circuit,
. a flexible photovoltaic module (11) assembled to the flexible printed circuit (12), the flexible photovoltaic module (11) comprising a photovoltaic layer and at least one electrical connection member (17, 18) adapted for electrical connection to the electrical connection member (23, 25) of the printed circuit,
the printed circuit (12) further comprising a supercapacitor (30) interposed between the printed circuit electrical connection member (23, 25) and the label communication module (27),
wherein the flexible printed circuit (12) comprises an analog comparator circuit (28) between the supercapacitor (30) and the label communication module (27), and having a hysteresis triggering the power supply to the label communication module (27) for a first input voltage, and suspending the power supply to the label communication module (27) for a second input voltage lower than the first input voltage.

2. The system for locating labels of claim 1, wherein the flexible printed circuit (12) comprises at least one capacitance in parallel with the supercapacitor (30).

3. System for locating labels according to one of claims 1 to 2, wherein the flexible printed circuit (12) comprises an electronic protection circuit (37) between the photovoltaic module (11) and the supercapacitor (30).

4. System for locating labels according to one of claims 1 to 3, wherein the label (8) further comprises a flexible housing (34) assembled to the flexible printed circuit (12) and to the flexible photovoltaic module (11), the flexible printed circuit (12) being interposed between the housing (34) and the flexible photovoltaic module (11).

5. System for locating labels according to one of claims 1 to 4, in which the flexible printed circuit (12) comprises a processor (26) adapted to implement a processing dependent on a parameter of the power supply of the flexible printed circuit (12) by the photovoltaic module (11).

6. A system for locating labels according to one of claims 1 to 5, further comprising a processor (6) adapted to determine a position of the label (8) from a communication received at the anchor communication module.

7. A system for locating labels according to claim 6, wherein the processor (6) comprises a computerized control module adapted to issue a notification after comparing the received communications with a control list or a programmed route for a label (8).

8. Flexible label, including:
. a flexible printed circuit (12) comprising at least one label communication module (27) adapted to communicate with an anchor communication module, and an electrical connection member (23, 25) of the printed circuit,
. a flexible photovoltaic module (11) assembled to the flexible printed circuit (12), the flexible photovoltaic module (11) comprising a photovoltaic layer and at least one electrical connection member (17, 18) adapted for electrical connection to the electrical connection member (23, 25) of the printed circuit,
the printed circuit (12) further comprising a supercapacitor (30) interposed between the printed circuit electrical connection member (23, 25) and the label communication module (27),
**characterized in that** the flexible printed circuit (12) comprises an analog comparator circuit (28) between the supercapacitor (30) and the label communication module (27), and having a hysteresis triggering the power supply to the label communication module (27) for a first input voltage, and suspending the power supply to the label communication module (27) for a second input voltage lower than the first input voltage.
